# EUROPÄISCHE PATENTSCHRIFT

(11) **EP 3 171 570 B1**
(45) Veröffentlichungstag und Bekanntmachung des Hinweises auf die Patenterteilung: **08.05.2019**
(21) Anmeldenummer: 16195892.1
(22) Anmeldetag: 27.10.2016
(51) Int. Cl.: H04L 29/06, H04L 29/08, H04L 12/46

(54) **VORRICHTUNG UND VERFAHREN ZUM ANPASSEN VON BERECHTIGUNGSINFORMATIONEN EINES ENDGERÄTS**
DEVICE AND METHOD FOR ADJUSTING AUTHORITY INFORMATION OF A TERMINAL
DISPOSITIF ET PROCÉDÉ D'ADAPTATION D'INFORMATIONS D'AUTORISATION D'UN TERMINAL

(30) Priorität: 23.11.2015 DE 102015223078
(43) Veröffentlichungstag der Anmeldung: 24.05.2017
(73) Patentinhaber: Siemens Aktiengesellschaft, 80333 München (DE)
(72) Erfinder: Falk, Rainer, 85586 Poing (DE); Fries, Steffen, 85598 Baldham (DE)

(56) Entgegenhaltungen:
- US-A1- 2007 157 286
- Budesamt für Sicherheit in der Informationstechnik: "Überblickspapier Netzzugangskontrolle", , 19. Dezember 2011 (2011-12-19), XP055338864, Gefunden im Internet: URL:https://www.bsi.bund.de/SharedDocs/Dow nloads/DE/BSI/Grundschutz/Download/Ueberbl ickspapier_Netzzugangskontrolle.pdf?__blob =publicationFile [gefunden am 2017-01-24]
- G. Mark Hardy: "Interested in learning more about security? The Critical Security Controls: What's NAC Got to Do with IT?", , 30. April 2013 (2013-04-30), Seiten 1-21, XP055338893, Gefunden im Internet: URL:https://www.sans.org/reading-room/whit epapers/analyst/critical-security-controls -what-039-s-nac-it-35115 [gefunden am 2017-01-25]
- Markus Nispel: "Grundlagen zur Kombination von NAC-und SIEM-Lösungen Was leisten Netzwerk-Zugangskontrolle und Security-Event-Management gemeinsam?", , 26. Mai 2008 (2008-05-26), Seiten 1-8, XP055338883, Gefunden im Internet: URL:http://files.vogel.de/vogelonline/pdfa rticles/122/2/122290.pdf [gefunden am 2017-01-25]

## Beschreibung

Die vorliegende Erfindung betrifft eine Vorrichtung zum Anpassen von Berechtigungsinformationen eines Endgeräts. Des Weiteren betrifft die vorliegende Erfindung ein Netzwerksystem mit zumindest einem Endgerät sowie zumindest einer solchen Vorrichtung. Darüber hinaus betrifft die Erfindung ein Verfahren zum Anpassen von Berechtigungsinformationen eines Endgeräts.

Sicherheitsprotokolle zur Authentisierung und Schlüsselvereinbarung dienen dazu, Kommunikationspartner zu authentisieren und einen kryptographischen Sitzungsschlüssel zum kryptographischen Schutz von nachfolgend übertragenen Nutzdaten zu vereinbaren. Die Authentisierung kann dabei einseitig oder beidseitig erfolgen oder gegebenenfalls sogar entfallen, wobei die Kommunikationspartner unauthentisiert bzw. anonym miteinander kommunizieren.

Häufig wird eine gemeinsame Chiffrensammlung (Cipher Suite) ausgehandelt, die eine anzuwendende Option zum kryptographischen Schutz der Nutzdaten definiert. Diese kann beispielsweise einen Kryptoalgorithmus, eine Schlüssellänge, einen Betriebsmodus einer Blockchiffre oder weitere Sicherheitsdienste wie zum Beispiel Nachrichtenintegrität definieren. Hierbei wird häufig eine Zertifikats-basierte Authentisierung verwendet, bei der ein digitales Zertifikat überprüft werden muss. In der Praxis verwendete Protokolle wie SSL, TLS, IKEv2 unterstützen eine Vielzahl von Optionen zur Authentisierung und Schlüsselvereinbarung über Cipher Suites.

Da Cipher Suites in einem breiten Umfeld unterstützt werden, entstehen jedoch auch Schwachstellen in Systemen, da noch Algorithmen unterstützt wurden, die mittlerweile bekannt gewordene Schwächen aufweisen.

Es ist daher wünschenswert, die Nutzung von schwachen Optionen zu verhindern.

Die involvierten Endknoten einer Authentisierung und Schlüsselvereinbarung können hierzu beispielsweise selbst eine feste oder konfigurierbare Richtlinie bzw. Policy verwenden. Die Knoten prüfen dabei selbst, welche Optionen zulässig sind. Es wird eine Konfiguration ausgehandelt, die von beiden Knoten unterstützt wird. Hierbei müssen allerdings entsprechende Policys auf einer Vielzahl von Knoten eingerichtet werden.

Insbesondere bei Internet-of-Things-Anwendungsszenarien mit einer Vielzahl von Knoten ist dies mit einem hohen Aufwand verbunden und birgt die Gefahr von Fehlkonfiguration. Insbesondere können Knoten unterschiedliche Eingabemethoden und Formate für das Ändern von Konfigurationseinstellungen aufweisen, oder keine Schnittstelle anbieten, um die zulässigen Optionen durch eine konfigurierbare Policy festzulegen. Auch besteht die Gefahr, dass ein Firmware-Update die unterstützten Optionen ändert. Daher ist es aufwändig und fehleranfällig, auf jedem einzelnen Knoten eine entsprechende Policy einzurichten.

Das Dokument "Überblickspapier Netzzugangskontrolle" vom Bundesamt für Sicherheit in der Informationstechnik beschreibt Konzepte und Techniken für eine Netzzugangskontrolle.

US 2007/157286 A1 beschreibt ein Verfahren und ein System zum Analysieren und Verifizieren einer Erfüllung von Sicherheitsstrategien von Vorrichtungen in einem Netzwerk.

Das Dokument "The Critical Security Controls: What's NAC Got to Do with IT?" von G. Mark Hardy gibt einen Überblick über die Möglichkeiten eines Network Access Controls (NAC).

Das Dokument "Grundlagen zur Kombination von NAC- und SIEM-Lösungen - Was leisten Netzwerk-Zugangskontrolle und Security-Event-Management gemeinsam?" von Markus Nispel beschreibt die Grundlagen von Netzwerk-Zugangskontrolle und Security-Event-Management.

Vor diesem Hintergrund besteht eine Aufgabe der vorliegenden Erfindung darin, auf einfache Weise Optionen eines Protokolls, die durch ein Endgerät unterstützt werden, zu überprüfen und eine Kommunikation des Endgeräts entsprechend anzupassen.

Demgemäß wird eine Vorrichtung zum Anpassen von Berechtigungsinformationen eines Endgeräts vorgeschlagen. Die Vorrichtung weist eine Kommunikationseinheit zur Kommunikation mit dem Endgerät, wobei die Kommunikationseinheit dazu eingerichtet ist, die Kommunikation als Test-Kommunikation unter Verwendung eines Verschlüsselungsprotokolls durchzuführen, eine Überprüfungseinheit, die dazu eingerichtet ist eine Konfiguration des Verschlüsselungsprotokolls, wie sie für eine Kommunikation des Endgeräts mit einem anderen Endgerät verwendet werden soll, auf dem Endgerät vorab zu überprüfen und eine

Steuereinheit zum Anpassen der Berechtigungsinformationen des Endgeräts basierend auf einem Ergebnis der Überprüfung auf.

Die jeweilige Einheit, zum Beispiel Überprüfungseinheit oder Steuereinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

In Netzwerken werden Netzwerkzwischenknoten, wie eine Firewall, verwendet, um eine Kommunikation von Endgeräten innerhalb eines Netzwerksystems mit externen Netzwerknoten, d.h. Netzwerkknoten außerhalb des Netzwerksystems, zu ermöglichen. Diese Firewalls können allerdings bei einer verschlüsselten Verbindung die für diese Verbindung zwischen den einzelnen Geräten bzw. Endpunkte ausgehandelten Optionen für diese verschlüsselte Verbindung nicht immer überprüfen.

Durch die vorgeschlagene Vorrichtung ist es möglich, die Konfiguration eines Verschlüsselungsprotokolls, wie sie für eine Kommunikation eines Endgeräts mit einem anderen Endgerät verwendet werden soll, vorab zu überprüfen. Das bedeutet, dass, bevor die tatsächliche Kommunikation stattfindet, eine Test-Kommunikation durch die Kommunikationseinheit durchgeführt wird. Diese Test-Kommunikation entspricht einer Kommunikation mit einem Verschlüsselungsprotokoll, wie sie auch mit einem anderen externen Endgerät, beispielsweise über eine Firewall, durchgeführt werden würde.

Während dieser Test-Kommunikation kann die Überprüfungseinheit überprüfen, welche Konfiguration des Verschlüsselungsprotokolls durch das Endgerät verwendet wird. Beim Verbindungsaufbau bzw. dem Verbindungsaufbauversuch übermittelt das überprüfte Endgerät eine Information über die unterstützten Optionen bzw. die Konfiguration des Verschlüsselungsprotokolls. Die Überprüfungseinheit kann diese übermittelten Informationen mit vorgegebenen Informationen abgleichen. Beispielsweise kann die Überprüfungseinheit überprüfen, ob oder inwieweit die übermittelten Informationen mit einer vorgegebenen Policy übereinstimmen.

Basierend auf einem Ergebnis dieser Überprüfung kann die Steuereinheit Berechtigungsinformationen des Endgeräts anpassen. Anpassen in diesem Zusammenhang kann sowohl ein Ändern als auch ein Nicht-Ändern der Berechtigungsinformationen beinhalten. Die Berechtigungsinformationen können unter anderem definieren, für welche Kommunikationsarten oder mit welchen Kommunikationspartnern das Endgerät zugelassen wird.

Die Vorrichtung kann in einer Ausführungsform in einer Firewall integriert sein. In diesem Fall könnte die Vorrichtung nicht nur eine Test-Kommunikation mit einem internen Endgerät, sondern auch mit einem externen Server aufbauen. Das bedeutet, dass die Vorrichtung in dieser Ausführungsform eine Überprüfung intern und extern durchführen kann.

Gemäß einer Ausführungsform ist das Verschlüsselungsprotokoll ein Transport Layer Security (TLS) Protokoll oder ein Secure Socket Layer (SSL) Protokoll.

TLS bzw. der Vorgänger SSL sind Sicherheitsprotokolle, die im Internet, z.B. beim Online-Einkauf oder Online-Banking, eingesetzt werden, um eine sichere Datenübertragung zu gewährleisten. Diese Protokolle werden auch auf einer Vielzahl von industriellen Feldgeräten eingesetzt, wie z.B. Diagnoseschnittstellen oder der Steuerungskommunikation.

Gemäß einer weiteren Ausführungsform ist die Steuereinheit dazu eingerichtet, basierend auf den angepassten Berechtigungsinformationen ein Warnsignal auszugeben.

Falls die Überprüfungseinheit erkennt, dass unsichere oder unzulässige Optionen des Verschlüsselungsprotokolls durch das Endgerät unterstützt werden, so kann ein Warnsignal, beispielsweise an einen Systemadministrator oder eine zentrale Einheit, ausgegeben werden. Das Warnsignal kann Informationen über die angepassten Berechtigungsinformationen und/oder die durch das Endgerät verwendete Konfiguration enthalten. Anhand des Warnsignals können weitere Anpassungen innerhalb des Netzwerks, beispielsweise auch direkt an dem Endgerät vorgenommen werden. So kann das Endgerät für eine Außenkommunikation, d.h. eine Kommunikation aus dem eigenen Netzwerk hinaus, gesperrt werden. Des Weiteren kann eine Anpassung der Konfiguration des Verschlüsselungsprotokolls auf dem Endgerät vorgenommen werden, um eine gegebene Policy bzw. Richtlinie zu erfüllen.

Gemäß einer weiteren Ausführungsform ist die Steuereinheit dazu eingerichtet, die angepassten Berechtigungsinformationen an eine Firewallvorrichtung zu übertragen.

In der Firewallvorrichtung kann basierend darauf beispielsweise eine Außenkommunikation des Endgeräts gesperrt oder zumindest eingeschränkt bzw. freigegeben werden.

Gemäß einer weiteren Ausführungsform ist die Kommunikationseinheit dazu eingerichtet, die Test-Kommunikation unter Verwendung des Verschlüsselungsprotokolls zu dem Endgerät aufzubauen.

Gemäß dieser Ausführungsform kann die Kommunikationseinheit aktiv eine Kommunikation zu dem Endgerät aufbauen. Dies kann gemäß einer definierten Regel erfolgen, beispielsweise in bestimmten zeitlichen Abständen. Alternativ oder zusätzlich kann die Test-Kommunikation auf Aufforderung, beispielsweise durch eine Firewall, aufgebaut werden.

Gemäß einer weiteren Ausführungsform ist die Kommunikationseinheit dazu eingerichtet, eine Initiierungsnachricht von dem Endgerät zu empfangen und die Test-Kommunikation unter Verwendung des Verschlüsselungsprotokolls zu dem Endgerät nach dem Empfang der Initiierungsnachricht aufzubauen.

Gemäß dieser Ausführungsform kann das Endgerät selbst eine Überprüfung initiieren. Dies kann beispielsweise erfolgen, bevor das Endgerät eine Kommunikation nach außen aufbauen möchte.

Gemäß einer weiteren Ausführungsform ist die Kommunikationseinheit dazu eingerichtet, eine Test-Kommunikation unter Verwendung des Verschlüsselungsprotokolls zu einer Mehrzahl von Ports des Endgeräts aufzubauen.

Hierbei können mehrere Test-Kommunikationen zu unterschiedlichen Ports aufgebaut werden. Dies ist unter anderem dann vorteilhaft, wenn unterschiedliche TLS-Implementierungen oder TLS-Konfigurationen auf einem Endgerät vorhanden sind. Somit können gleichzeitig alle vorhandenen Konfigurationen getestet bzw. überprüft werden.

Gemäß einer weiteren Ausführungsform ist die Kommunikationseinheit dazu eingerichtet, nach Beendigung der Überprüfung die Testkommunikation zu beenden.

Zwischen dem Endgerät und der Vorrichtung wird zur Überprüfung eine TLS-Verbindung als Test-Kommunikation aufgebaut, um die Konfiguration des Endgeräts zu ermitteln und zu prüfen. Im Gegensatz zu TLS-Proxys bleibt die Vorrichtung nicht im Kommunikationspfad, sondern baut die TLS-Verbindungen nur auf, um die Konfiguration/Implementierung des TLS-Protokolls zu überprüfen. Anschließend wird die Test-Kommunikation wieder beendet.

Gemäß einer weiteren Ausführungsform ist die Kommunikationseinheit dazu eingerichtet, eine Kommunikation des Endgeräts zu einem Server zu unterbrechen und die Testkommunikation mit dem Endgerät durchzuführen.

Ein Verbindungsaufbau des Endgeräts zu einem Zielknoten kann hierbei zu der Vorrichtung umgelenkt werden, um eine Überprüfung der Konfiguration vorzunehmen. Erst nach Abschluss der Überprüfung wird diese Umlenkung wieder aufgehoben.

Gemäß einer weiteren Ausführungsform ist die Steuereinheit dazu eingerichtet, die Kommunikation des Endgeräts mit dem Server basierend auf den angepassten Berechtigungsinformationen freizugeben oder abzubrechen.

Die Aufhebung der Umlenkung kann dabei entweder in einem Abbruch der Kommunikation resultieren, sowohl bei einem positiven als auch einem negativen Ergebnis der Überprüfung, oder in einer Freigabe der Kommunikation mit dem Server und einem Zurückgeben der Kommunikation an diesen, bei einem positiven Ergebnis der Überprüfung.

Gemäß einer weiteren Ausführungsform enthält die Konfiguration des Verschlüsselungsprotokolls Richtlinien, kryptographische Parameter und/oder Protokolloptionen.

Die Konfiguration des Verschlüsselungsprotokolls kann dabei mit vordefinierten Richtlinien bzw. einer Security Policy verglichen werden. Eine solche Security Policy kann dabei folgende Punkte umfassen, die durch einen Handshake (z.B. TLS) ausgehandelt werden können:
- Vorgeschlagene und akzeptierte Authentisierungsverfahren (auch Priorisierung)
- Bei der Nutzung von zertifikatsbasierter Authentisierung kann zusätzlich
   - eine Verifikation des genutzten Zertifikates (inkl. Zertifikatspfad) durchgeführt werden,
   - die genutzten Key Usage Fields im Zertifikat überprüft werden,
   - die genutzten Erweiterungen (Extensions) eines Zertifikats überprüft werden,
- Vorgeschlagener und akzeptierter Nachrichtenintegritätsschutz (auch Priorisierung)
- Vorgeschlagene und akzeptierte Nachrichtenvertraulichkeit (auch Priorisierung)
- Güte kryptographischer Parameter (Schlüssel, öffentliche Parameter von Kryptoverfahren, Diffie-Hellman-Parameter, etc.)
- Protokolloptionen für Aktualisierung eines Sessionschlüssels

Des Weiteren wird ein Netzwerksystem mit zumindest einem Endgerät und zumindest einer wie oben erläuterten Vorrichtung zum Anpassen der Berechtigungsinformationen des zumindest einen Endgeräts vorgeschlagen.

Darüber hinaus wird ein Verfahren zum Anpassen von Berechtigungsinformationen eines Endgeräts vorgeschlagen. Das Verfahren weist die folgenden Schritte auf: Durchführen einer Kommunikation mit dem Endgerät, wobei die Kommunikation als Test-Kommunikation unter Verwendung eines Verschlüsselungsprotokolls durchgeführt wird, vorab Überprüfen einer Konfiguration des Verschlüsselungsprotokolls, wie sie für eine Kommunikation des Endgeräts mit einem anderen Endgerät verwendet werden soll, auf dem Endgerät und Anpassen der Berechtigungsinformationen des Endgeräts basierend auf einem Ergebnis der Überprüfung.

Die für die vorgeschlagene Vorrichtung beschriebenen Ausführungsformen und Merkmale gelten für das vorgeschlagene Verfahren entsprechend.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Figur 1: zeigt eine schematische Blockansicht eines erfindungsgemäßen Ausführungsbeispiels einer Vorrichtung zum Anpassen von Berechtigungsinformationen eines Endgeräts;
- Figur 2: zeigt ein erfindungsgemäßes Ausführungsbeispiel eines Netzwerksystems mit zwei Vorrichtungen zum Anpassen von Berechtigungsinformationen eines Endgeräts;
- Figur 3: zeigt ein schematisches Ablaufdiagramm eines erfindungsgemäßen Ausführungsbeispiels eines Verfahrens zum Anpassen von Berechtigungsinformationen eines Endgeräts; und
- Figur 4: zeigt ein weiteres schematisches Ablaufdiagramm eines erfindungsgemäßen Ausführungsbeispiels eines Verfahrens zum Anpassen von Berechtigungsinformationen eines Endgeräts.

In den Figuren sind gleiche oder funktionsgleiche Elemente mit denselben Bezugszeichen versehen worden, sofern nichts anderes angegeben ist.

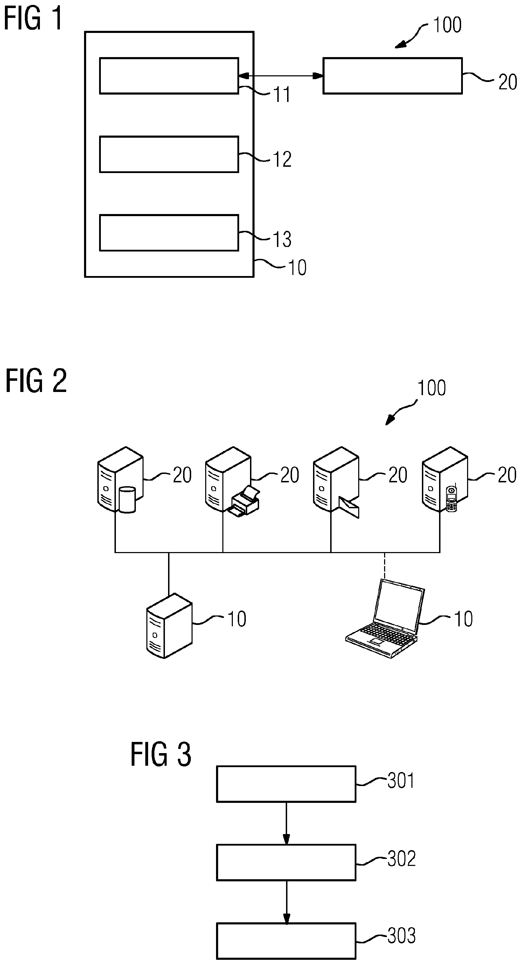

Fig. 1 zeigt eine Vorrichtung 10 zum Anpassen von Berechtigungsinformationen eines Endgeräts 20 in einem Netzwerksystem 100. Die Vorrichtung 10 weist eine Kommunikationseinheit 11, eine Überprüfungseinheit 12 und eine Steuereinheit 13 auf.

Die Kommunikationseinheit 11 führt eine Kommunikation mit dem Endgerät 20 durch. Hierbei wird eine Test-Kommunikation unter Verwendung eines Verschlüsselungsprotokolls durchgeführt.

Die Überprüfungseinheit 12 überprüft während der Test-Kommunikation die Konfiguration des Verschlüsselungsprotokolls, wie sie auf dem Endgerät 20 vorliegt. Hierbei kann die Überprüfungseinheit 12 diese Konfiguration mit vordefinierten Richtlinien oder Policies, wie sie erfüllt werden sollen, abgleichen.

Die Steuereinheit 13 kann schließlich Berechtigungsinformationen des Endgeräts 20 basierend auf einem Ergebnis der Überprüfung anpassen.

Mit der Vorrichtung 10 ist es möglich, Konfigurationen von Endgeräten 20, insbesondere des TLS-Protokolls, zu überprüfen. Dazu wird eine Testverbindung zur Probe aufgebaut. Eine Überprüfung der unterstützten Optionen bzw. der Konfiguration kann somit auf einfache Weise erfolgen. Sie können auch dann erfasst werden, wenn die Authentisierung, Schlüsselvereinbarung und Aushandlung von Optionen über eine verschlüsselte Kommunikationsverbindung erfolgen und somit von einem Zwischenknoten, wie einer Firewall, nicht überwacht werden können.

Die Überprüfung durch die Vorrichtung 10 kann zu beliebigen Zeitpunkten erfolgen, nicht nur bei einem tatsächlichen Verbindungsaufbau. Darüber hinaus wird hierzu keine spezifische Software-Komponente auf der überprüften Komponente 20 benötigt, da über den Verbindungsaufbau die vorhandene Funktionalität direkt genutzt wird. Die Ergebnisse der Verifikation können beispielsweise im Rahmen von NAC Maßnahmen (Remediation) genutzt werden.

Durch die Vorrichtung 10 können auch spezielle Policys geprüft werden. TLS z.B. realisiert über die Reihenfolge der angegebenen Cipher Suites auch eine Priorisierung. Diese kann durch die Vorrichtung 10 bzw. die Überprüfungseinheit 12 getestet werden. Ebenso kann getestet werden, ob Cipher Suites unterstützt werden, die der Rückwärtskompatibilität dienen oder nicht explizit ausgeschaltet wurden. Derartige Probleme werden z.B. in Schwachstellen wie Freak oder Logjam ausgenutzt.

Fig. 2 zeigt einen beispielhaften Aufbau eines Netzwerksystems 100. Hierbei stehen mehrere Serverkomponenten als Endgeräte 20 in einem Netz für bestimmte Anwendungen zur Verfügung. Die Vorrichtung 10 kann als permanente Einrichtung oder auch temporär als mobiles Gerät im Netzwerk 100 zur Verfügung stehen.

Die Vorrichtung 10 ist hierbei mit der lokalen Security Policy des Netzwerkes 100 konfiguriert. Diese kann sie z.B. im Falle einer industriellen Anlage aus den Engineering-Daten ableiten. In einem Office-Netzwerk können entsprechende Policies über einen Group Policy Server in einer Domäne abgefragt werden.

In einer weiteren Ausgestaltung kann die Vorrichtung 10 auch eine Funktionalität eines Policy Enforcement Servers im Netzwerk 100 sein. Abhängig von der Einhaltung einer Security Policy kann die Vorrichtung 10 die zum Testobjekt 20 nächstliegende Infrastrukturkomponente, z.B. Switch oder Router, dynamisch umkonfigurieren, um ein Umstellen der Policy des Testobjektes 20 zu ermöglichen. Hierzu kann das Testobjekt 20 beispielsweise in ein separates VLAN (Virtual Local Area Network) versetzt werden, wie es aus den NAC (Network Access Control, auch Network Admission Control) Ansätzen bekannt ist. In Netzwerken, die mittels Software Defined Networking (SDN) konfiguriert werden, kann diese Verschiebung durch den SDN Controller erfolgen.

Basierend auf dieser Security Policy baut die Vorrichtung 10 nun eine TLS Verbindung oder ein entsprechendes anderes genutztes Security Protokoll auf, um im Rahmen des Protokoll-Handshakes die Security Policies der getesteten Server-Komponente 20 abzufragen und diese mit der vorliegenden Policy zu vergleichen.

Fig. 3 zeigt ein Verfahren zum Anpassen von Berechtigungsinformationen eines Endgeräts 20. Das Verfahren weist die Schritte 301 bis 303 auf.

In Schritt 301 wird eine Kommunikation mit dem Endgerät 20 durchgeführt, wobei eine Kommunikation als Test-Kommunikation unter Verwendung eines Verschlüsselungsprotokolls durchgeführt wird.

In Schritt 302 wird die Konfiguration des Verschlüsselungsprotokolls auf dem Endgerät 20 überprüft.

In Schritt 303 werden schließlich die Berechtigungsinformationen des Endgeräts 20 basierend auf einem Ergebnis der Überprüfung angepasst.

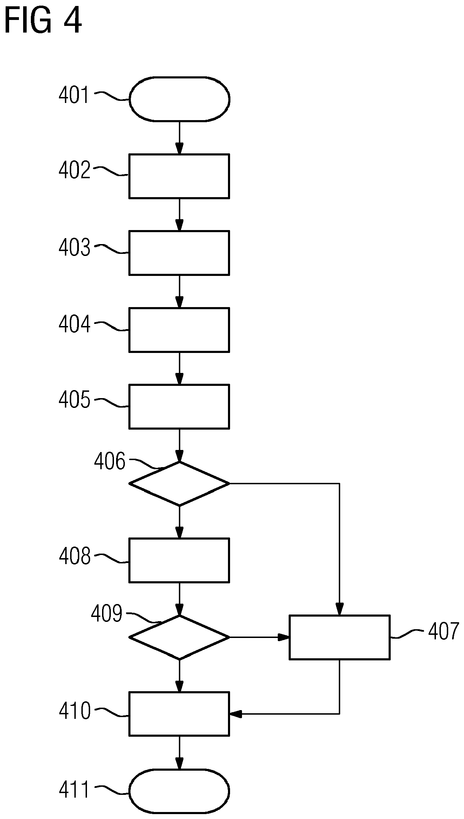

Fig. 4 zeigt einen beispielhaften detaillierten Ablauf des Verfahrens zum Anpassen der Berechtigungsinformationen.

In Schritt 401 wird die Vorrichtung 10 gestartet.

In Schritt 402 wird zuerst die Security Policy des Netzwerks 100 abgefragt.

In Schritt 403 wird das Endgerät 20 gestartet und in Schritt 404 eine Anfangsnachricht an dieses gesendet.

Die Überprüfung der Konfiguration erfolgt hier in zwei Schritten.

Zunächst wird in Schritt 405 eine Nachricht von dem Endgerät 20 empfangen. Diese Nachricht wird eine verwendete Protokollversion, Cipher Suite oder andere Protokollmerkmale hin überprüft.

In Schritt 406 wird bestimmt, ob die ermittelten Informationen der Security Policy des Netzwerks 100 entsprechen. Ist dies nicht der Fall, fährt das Verfahren mit Schritt 407 fort, in dem beispielsweise ein Alarmsignal ausgegeben wird.

Entsprechen die ermittelten Informationen der Security Policy des Netzwerks 100, fährt das Verfahren mit Schritt 408 fort und überprüft nun die TLS-Handshake-Nachrichten. Diese können beispielsweise auf Diffie-Hellman-Parameter hin überprüft werden.

In Schritt 409 wird nun erneut bestimmt, ob die ermittelten Informationen der Security Policy des Netzwerks 100 entsprechen. Ist dies nicht der Fall, fährt das Verfahren mit Schritt 407 fort.

Entsprechen die ermittelten Informationen der Security Policy des Netzwerks 100, fährt das Verfahren mit Schritt 410 fort und passt die Berechtigungsinformationen des Endgeräts 20 an.

Die Anpassung in Schritt 410 erfolgt auch nach Ausgabe eines Warnsignals in Schritt 407.

In Schritt 411 endet das Verfahren.

Obwohl die vorliegende Erfindung anhand von Ausführungsbeispielen beschrieben wurde, ist sie vielfältig modifizierbar.

## Patentansprüche

1. Vorrichtung (10) zum Anpassen von Berechtigungsinformationen eines Endgeräts (20), mit:
einer Kommunikationseinheit (11) zur Kommunikation mit dem Endgerät (20), wobei die Kommunikationseinheit (11) dazu eingerichtet ist, die Kommunikation als Test-Kommunikation unter Verwendung eines Verschlüsselungsprotokolls durchzuführen,
einer Überprüfungseinheit (12), die dazu eingerichtet ist, während der Test-Kommunikation eine Konfiguration des Verschlüsselungsprotokolls, wie sie für eine Kommunikation des Endgeräts mit einem anderen Endgerät verwendet werden soll, auf dem Endgerät (20) vorab zu überprüfen, und
einer Steuereinheit (13) zum Anpassen der Berechtigungsinformationen des Endgeräts (20) basierend auf einem Ergebnis der Überprüfung.

2. Vorrichtung (10) nach Anspruch 1,
**dadurch gekennzeichnet,**
**dass** das Verschlüsselungsprotokoll ein Transport Layer Security Protokoll oder ein Secure Socket Layer Protokoll ist.

3. Vorrichtung (10) nach Anspruch 1 oder 2,
**dadurch gekennzeichnet,**
**dass** die Steuereinheit (13) dazu eingerichtet ist, basierend auf den angepassten Berechtigungsinformationen ein Warnsignal auszugeben.

4. Vorrichtung (10) nach einem der Ansprüche 1 - 3,
**dadurch gekennzeichnet,**
**dass** die Steuereinheit (13) dazu eingerichtet ist, die angepassten Berechtigungsinformationen an eine Firewallvorrichtung zu übertragen.

5. Vorrichtung (10) nach einem der Ansprüche 1 - 4,
**dadurch gekennzeichnet,**
**dass** die Kommunikationseinheit (11) dazu eingerichtet ist, die Test-Kommunikation unter Verwendung des Verschlüsselungsprotokolls zu dem Endgerät (20) aufzubauen.

6. Vorrichtung (10) nach Anspruch 5,
**dadurch gekennzeichnet,**
**dass** die Kommunikationseinheit (11) dazu eingerichtet ist, eine Initiierungsnachricht von dem Endgerät (20) zu empfangen und die Test-Kommunikation unter Verwendung des Verschlüsselungsprotokolls zu dem Endgerät (20) nach dem Empfang der Initiierungsnachricht aufzubauen.

7. Vorrichtung (10) nach Anspruch 5 oder 6,
**dadurch gekennzeichnet,**
**dass** die Kommunikationseinheit (11) dazu eingerichtet ist, eine Test-Kommunikation unter Verwendung des Verschlüsselungsprotokolls zu einer Mehrzahl von Ports des Endgeräts (20) aufzubauen.

8. Vorrichtung (10) nach einem der Ansprüche 1 - 7,
**dadurch gekennzeichnet,**
**dass** die Kommunikationseinheit (11) dazu eingerichtet ist, nach Beendigung der Überprüfung die Testkommunikation zu beenden.

9. Vorrichtung (10) nach einem der Ansprüche 1 - 8,
**dadurch gekennzeichnet,**
**dass** die Kommunikationseinheit (11) dazu eingerichtet ist, eine Kommunikation des Endgeräts (20) zu einem Server zu unterbrechen und die Testkommunikation mit dem Endgerät (20) durchzuführen.

10. Vorrichtung (10) nach Anspruch 9,
**dadurch gekennzeichnet,**
**dass** die Steuereinheit (13) dazu eingerichtet ist, die Kommunikation des Endgeräts (20) mit dem Server basierend auf den angepassten Berechtigungsinformationen freizugeben oder abzubrechen.

11. Vorrichtung (10) nach einem der Ansprüche 1 - 10,
**dadurch gekennzeichnet,**
**dass** die Konfiguration des Verschlüsselungsprotokolls Richtlinien, kryptographische Parameter und/oder Protokolloptionen enthält.

12. Netzwerksystem (100) mit:
zumindest einem Endgerät (20), und
zumindest einer Vorrichtung (10) nach einem der Ansprüche 1 - 11 zum Anpassen der Berechtigungsinformationen des zumindest einen Endgeräts (20).

13. Verfahren zum Anpassen von Berechtigungsinformationen eines Endgeräts (20), mit:
Durchführen (301) einer Kommunikation mit dem Endgerät (20), wobei die Kommunikation als Test-Kommunikation unter Verwendung eines Verschlüsselungsprotokolls durchgeführt wird,
während der Test-Kommunikation, vorab Überprüfen (302) einer Konfiguration des Verschlüsselungsprotokolls, wie sie für eine Kommunikation eines Endgeräts mit einem anderen Endgerät verwendet werden soll, auf dem Endgerät (20) und
Anpassen (303) der Berechtigungsinformationen des Endgeräts (20) basierend auf einem Ergebnis der Überprüfung.

14. Computerprogrammprodukt, welches auf einer programmgesteuerten Einrichtung die Durchführung des Verfahrens nach Anspruch 13 veranlasst.

## Claims

1. Apparatus (10) for adapting authorization information for a terminal (20), having:
a communication unit (11) for communicating with the terminal (20), the communication unit (11) being configured to carry out the communication as test communication using an encryption protocol,
a checking unit (12) which is configured, during the test communication, to check beforehand a configuration of the encryption protocol, as it is to be used for communication of the terminal with another terminal, on the terminal (20), and
a control unit (13) for adapting the authorization information for the terminal (20) on the basis of a result of the check.

2. Apparatus (10) according to Claim 1,
**characterized in that**
the encryption protocol is a transport layer security protocol or a secure socket layer protocol.

3. Apparatus (10) according to Claim 1 or 2,
**characterized in that**
the control unit (13) is configured to output a warning signal on the basis of the adapted authorization information.

4. Apparatus (10) according to one of Claims 1-3,
**characterized in that**
the control unit (13) is configured to transmit the adapted authorization information to a firewall apparatus.

5. Apparatus (10) according to one of Claims 1-4,
**characterized in that**
the communication unit (11) is configured to set up the test communication to the terminal (20) using the encryption protocol.

6. Apparatus (10) according to Claim 5,
**characterized in that**
the communication unit (11) is configured to receive an initiation message from the terminal (20) and to set up the test communication to the terminal (20) using the encryption protocol after the initiation message has been received.

7. Apparatus (10) according to Claim 5 or 6,
**characterized in that**
the communication unit (11) is configured to set up test communication to a plurality of ports of the terminal (20) using the encryption protocol.

8. Apparatus (10) according to one of Claims 1-7,
**characterized in that**
the communication unit (11) is configured to conclude the test communication after the check has been concluded.

9. Apparatus (10) according to one of Claims 1-8,
**characterized in that**
the communication unit (11) is configured to interrupt communication between the terminal (20) and a server and to carry out the test communication with the terminal (20).

10. Apparatus (10) according to Claim 9,
**characterized in that**
the control unit (13) is configured to enable or abort the communication between the terminal (20) and the server on the basis of the adapted authorization information.

11. Apparatus (10) according to one of Claims 1-10,
**characterized in that**
the configuration of the encryption protocol contains guidelines, cryptographic parameters and/or protocol options.

12. Network system (100) having:
at least one terminal (20), and
at least one apparatus (10) according to one of Claims 1-11 for adapting the authorization information for the at least one terminal (20).

13. Method for adapting authorization information for a terminal (20), comprising:
carrying out (301) communication with the terminal (20), the communication being carried out as test communication using an encryption protocol,
during the test communication, checking (302) beforehand a configuration of the encryption protocol, as it is to be used for communication of a terminal with another terminal, on the terminal (20), and
adapting (303) the authorization information for the terminal (20) on the basis of a result of the check.

14. Computer program product which causes the method according to Claim 13 to be carried out on a program-controlled device.

## Revendications

1. Dispositif (10) d'adaptation d'informations d'autorisation d'un terminal (20), comportant :
une unité de communication (11) pour la communication avec le terminal (20), l'unité de communication (11) étant configurée pour exécuter la communication en tant que communication d'essai en utilisant un protocole de cryptage,
une unité de vérification (12) qui est configurée pour vérifier préalablement, sur le terminal (20), pendant la communication d'essai, une configuration du protocole de cryptage telle qu'elle doit être utilisée pour une communication du terminal avec un autre terminal et
une unité de commande (13) pour adapter les informations d'autorisation du terminal (20) sur la base d'un résultat de la vérification.

2. Dispositif (10) selon la revendication 1, **caractérisé en ce que** le protocole de cryptage est un protocole Transport Layer Security ou un protocole Secure Socket Layer.

3. Dispositif (10) selon la revendication 1 ou 2, **caractérisé en ce que** l'unité de commande (13) est conçue pour émettre un signal d'avertissement sur la base des informations d'autorisation adaptées.

4. Dispositif (10) selon l'une des revendications 1 - 3, **caractérisé en ce que** l'unité de commande (13) est configurée pour transmettre les informations d'autorisation adaptées à un dispositif pare-feu.

5. Dispositif (10) selon l'une des revendications 1 - 4, **caractérisé en ce que** l'unité de communication (11) est configurée pour établir la communication d'essai avec le terminal (20) en utilisant le protocole de cryptage.

6. Dispositif (10) selon la revendication 5, **caractérisé en ce que** l'unité de communication (11) est configurée pour recevoir un message d'initialisation du terminal (20) et établir la communication d'essai avec le terminal (20) en utilisant le protocole de cryptage après la réception du message d'initialisation.

7. Dispositif (10) selon la revendication 5 ou 6, **caractérisé en ce que** l'unité de communication (11) est configurée pour établir une communication d'essai avec une pluralité de ports du terminal (20) en utilisant le protocole de cryptage.

8. Dispositif (10) selon l'une des revendications 1 - 7, **caractérisé en ce que** l'unité de communication (11) est configurée pour terminer la communication d'essai après que la vérification est terminée.

9. Dispositif (10) selon l'une des revendications 1 - 8, **caractérisé en ce que** l'unité de communication (11) est configurée pour interrompre une communication du terminal (20) avec un serveur et exécuter la communication d'essai avec le terminal (20).

10. Dispositif (10) selon la revendication 9, **caractérisé en ce que** l'unité de commande (13) est configurée pour autoriser ou couper la communication du terminal (20) avec le serveur sur la base des informations d'autorisation adaptées.

11. Dispositif (10) selon l'une des revendications 1 - 10, **caractérisé en ce que** la configuration du protocole de cryptages contient des directives, des paramètres cryptographiques et/ou des options de protocole.

12. Système de réseau (100) comportant :
au moins un terminal (20) et
au moins un dispositif (10) selon l'une des revendications 1 - 11 pour adapter les informations d'autorisation de l'au moins un terminal (20).

13. Procédé d'adaptation d'informations d'autorisation d'un terminal (20), comportant :
l'exécution (301) d'une communication avec le terminal (20), la communication étant exécutée en tant que communication d'essai en utilisant un protocole de cryptage,
la vérification (302) préalable, pendant la communication d'essai, sur le terminal (20), d'une configuration du protocole de cryptage, telle qu'elle doit être utilisée pour une communication d'un terminal avec un autre terminal et
l'adaptation (303) des informations d'autorisation du terminal (20) sur la base d'un résultat de la vérification.

14. Produit de programme informatique qui fait exécuter le procédé selon la revendication 13 sur un dispositif commandé par programme.
